# EUROPÄISCHE PATENTSCHRIFT

(11) **EP 1 268 919 B1**
(45) Veröffentlichungstag und Bekanntmachung des Hinweises auf die Patenterteilung: **21.06.2006**
(21) Anmeldenummer: 01914943.4
(22) Anmeldetag: 02.04.2001
(51) Int. Cl.: D06M 15/39, D06M 15/423, D06M 15/263, D06M 13/224, D06M 11/79

(54) **AUSRÜSTUNG VON TEXTILEN FASERN, GEWEBEN UND FLÄCHENGEBILDEN**
FINISH OF TEXTILE FIBRES, TISSUES AND FABRICS
APPRET DE FIBRES TEXTILES, DE TISSUS ET DE STRUCTURES PLANES

(30) Priorität: 04.04.2000 CH 660002000; 16.06.2000 CH 121800; 26.03.2001 CH 556012001
(43) Veröffentlichungstag der Anmeldung: 02.01.2003
(73) Patentinhaber: Schoeller Textil AG, 9475 Sevelen (CH)
(72) Erfinder: KLAUS, Alfred, CH-8802 Au (CH); MARTE, Walter, CH-9631 Ulisbach (CH); MEYER, Ulrich, CH-8006 Zürich (CH); WAEBER, Peter, CH-9230 Flawil (CH)
(74) Vertreter: Köpf, Alfred
(86) Internationale Anmeldenummer: PCT/CH2001/000211
(87) Internationale Veröffentlichungsnummer: WO 2001/075216

(56) Entgegenhaltungen:
- WO-A-97/00995
- DE-A- 19 701 550
- GB-A- 763 464
- US-A- 4 610 915
- PROF.DR. H.-K. ROUETTE: "Lexikon für Textilveredlung" , LAUMANN-VERLAG , DÜLMEN XP002170546 Seite 1594 -Seite 1595

## Beschreibung

Die Erfindung betrifft wasser- und ölabweisende textile Fasern und Flächengebilde sowie ein Verfahren zur Ausrüstung von textilen Fasern, Geweben und Flächengebilden, insbesondere zur Erzeugung von wasch- und reinigungsbeständigen wasser- und ölabweisenden Ausrüsteffekten auf textilen Fasern, Geweben und Flächengebilden. Diese Ausrüsteffekte werden allgemein als Hydrophobierungs- und Oleophobierungs-Ausrüstung bezeichnet.

In der Textilveredlung werden heute eine Vielzahl von Hydrophobierungschemikalien angewendet, wobei einerseits zwischen wasch- und nichtwaschpermanenten und andererseits zwischen fluorcarbon- und nicht fluorcarbonhaltigen Hydrophobierungsmitteln unterschieden wird. Eine weitere Gruppe stellen die silikonhältigen Hydrophobierungsmittel dar. Der Einsatz silikonhaltiger Hydrophobierungsmittel ist auch in Kombination mit Fluorcarbonharzen bekannt. Schwermetallhaltige Fettsäurederivate, insbesondere Paraffine mit metallorganischen Verbindungen, werden alleine und in Kombination mit Flourcarbonharzen bei der Ausrüstung von textilen Fasern, Geweben und Flächengebilden eingesetzt. Allen Hydrophobierungsmitteln gemeinsam ist ihr mehr oder weniger unpolarer, nicht wasserlöslicher Charakter, weshalb sie in Form von Emulsionen bzw. Mikroemulsionen verwendet werden.

Die nicht waschpermanenten Hydrophobierungsmittel haben heute eine geringe Bedeutung, da auch die Qualität der damit zu erzielenden Hydrophobierungseffekte nicht mehr den heutigen Standards und Anforderungen entspricht.

Die meistens anzutreffenden Produkte bzw. die damit gefertigten Ausrüstungen basieren auf reaktiven, fettmodifizierten α-Aminoalkylierungsprodukten, Fluorcarbonharzen und Silikonderivaten bzw. deren Mischungen. Die besten Hydrophobierungseffekte lassen sich gemäss der heutigen Arbeitsweise nur mit Fluorcarbonharzen bzw. in Kombination mit fettmodifizierten, reaktiven, präpolykondensierten α-Aminoalkylierungsprodukten (Extendern) und selbstvernetzenden Bindemitteln (Booster) erreichen.
Als fettmodifizierte reaktivgruppenhaltige Verbindungen werden all jene bezeichnet, welche parallel zu mindestens einer Reaktivgruppe einen oder mehrere Alkylreste (C₈ - C₂₅) kovalent gebunden enthalten. Die vorzugsweise angewendeten fettmodifizierten α-Aminoalkylierungsprodukte sind >N-Methylolverbindungen von Fettaminen, Fettsäureamiden sowie mit Formaldehyd methylolierte Harnstoffderivate, deren Methylolfunktionen auch teilweise verethert sein können.

Aufgrund des gesteigerten Umweltbewusstseins der Konsumenten auf der einen Seite und zunehmend strenger werdenden gesetzlichen Richtlinien auf der anderen Seite werden vermehrt Textilausrüstungen gefordert, welche auch neuesten Oekologiestandards gerecht werden. Dies bedeutet, dass sowohl die verwendeten Fasermaterialien als auch Farb- und Ausrüststoffe im weitesten Sinne umweltverträglich sein müssen. Der Konsument verlangt Textilien, die unbedenklich getragen werden können. Bei Kleidungsstücken bedeutet dies, dass sie hautverträglich und frei von allergieauslösenden Stoffen sein sollen, dabei aber höchste Ansprüche an Tragkomfort und Funktionalität erfüllen.
Während der Herstellung der Textilien muss die Unbedenklichkeit im Umgang mit den verwendeten Rohstoffen und Ausrüst- und Hilfsstoffe sichergestellt sein. Auch die unbedenkliche Entsorgbarkeit der während der Produktion und Veredelung anfallenden Abfallchemikalien, Abwässer und Abluft wird gefordert. Und im Sinne eines geschlossenen Systems sollen die Textilen schlussendlich mit geringstmöglicher Umweltbelastung entsorgt oder recycliert werden können.

In der Summe führen diese Forderungen bereits heute zu einer Ächtung vieler Farbstoffe, halogenierter und silikonhaltiger Chemikalien sowie der Silikone selbst wie sie z.B. in den Hydrophobierungsausrüstungen von Bekleidungs- und technischen Geweben verwendet werden. Speziell halogenierte Ausrüstungsmittel führen bei deren Verwendung zu nur schwer entsorgbaren Abwasserinhaltstoffen sowie zu Entsorgungsproblemen der damit ausgerüsteten technischen Textilien und Bekleidungsstücke nach abgelaufener Lebensdauer.

Das Dokument WO 97/00995 beschreibt ein flüssiges Gemisch von Chemikalien sowie ein Halbprodukt für eine Ausrüstung auf textilen Fasern und Flächengebilden. Die dadurch entstandene polymerisierte Hydrophobierungs- oder Oleophobierungs-Ausrüstungsschicht umfasst mindestens ein Dispersionsmittel und mindestens eine dispergierenden Phase in einer homogenen Verteilung. Diese Schicht nutzt sich aber schnell ab.

Aufgabe der vorliegenden Erfindung ist es, eine Ausrüstungsschicht zu erreichen, welche eine verbesserte Hydrophobierungs- oder Oleophobierungswirkung erreicht und welche eine Auffrischung der Hydrophobierung ermöglicht.

Eine weitere Aufgabe der Erfindung ist es, ein neues Textilausrüstungsverfahren insbesondere zur Hydro- und Oleophobierung von Textilien (Wasserabstossung und Oelabweisung) zu realisieren, das es ermöglicht, textile Fasern und Flächengebilde herzustellen, die in ihren funktionellen Eigenschaften den nach bekannten Ausrüstverfahren hergestellten Produkten auf höchstem Niveau ebenbürtig oder überlegen sind, es dabei aber erlauben, die heute standardmässig eingesetzten Chemikalien durch neue, bisher nicht gebräuchliche Verbindungen ganz oder teilweise zu ersetzen.
Es ist eine weitere Aufgabe der vorliegenden Erfindung Hydro-und Oleophobierungen von Textilien zur Verfügung zu stellen, die es ermöglichen, eine mit der Zeit nachlassende hydro- oder Oleophobierungswirkung wieder ganz oder zumindest teilweise zu regenerieren.
Das weiteren soll die vorliegende Erfindung ein Textilausrüstungsverfahren beschreiben, welches es erlaubt, auf unerwünschte umweltunverträgliche Chemikalien zu verzichten, ohne bei der Qualität und Funktionalität der Ausrüstung Abstriche machen zu müssen.

Diese Aufgaben werden durch eine neue Hydrophobierungs- oder Oleophobierungs-Ausrüstungsschicht gemäss Patentanspruch 1, neue textile Artikel gemäss Patentanspruch 19 und ein neues Ausrüstverfahren gemäss Patentanspruch 23 gelöst.

Die Aufgabe wird einerseits gelöst durch eine anisotrope Verteilung der Kolloide der dispergierenden Phase im Dispersionsmittel. Anisotrop bedeutet, dass die Konzentration der Kolloide variiert und nicht homogen ist. An der Oberfläche der Ausrüstungsschicht befinden sich mehr Kolloide als in der Nähe der Fasern. Die anisotrope Verteilung ist von grosser Bedeutung für die vorliegende Erfindung, da die Kolloide (Guest-Komponenten) vorwiegend für die Hydrophobie verantwortlich sind. Sie müssen an der Oberfläche der Ausrüstungsschicht sein, um die gewünschte Hydrophobierung oder Oleophobierung der Ausrüstungsschicht zu erreichen.

Andererseits wird eine Auffrischung der Hydrophobierung ermöglicht, indem die erfindungsgemässe Ausrüstungsschicht im Gel Zustand vorliegt. Durch Wärmezufuhr, beispielsweise im Wäschetrockner, wird dieser Gel Zustand in einen Sol Zustand überführt, welcher die anisotrope Verteilung der Komponenten und somit die gewünschte Hydrophobierung oder Oleophobierung der Ausrüstungsschicht wieder auffrischt.

Ein wesentliches Merkmale der Erfindung ist die Verwendung eines Dispersions-Systems (wobei Dispersionen auch Emulsionen umfassen) als ein "guest-host"-System, welches eine räumliche Selbstorganisation der Ausrüstkomponenten ermöglicht. Durch die Selbstorganisation der "guest"- und "host"-Komponenten, respektive der dispergierten Phase und des Dispersionsmittels kommt es zur anisotropen Verteilung der "guest"-Komponente oder dispergierten Phase innerhalb der "host"-Komponente innerhalb der Ausrüstungsschicht. Die "guest"-Komponente konzentriert sich in der fertigen Ausrüstungsschicht an der Ausrüstungsschichtoberfläche und dominiert dadurch die physikalischen, chemischen und physikalisch-chemischen Eigenschaften an dieser Phasengrenzfläche zwischen der applizierten Ausrüstungsschicht und umgebender Atmosphäre. Durch gelbildende Zusätze in der Wasserphase des Dispersions-Systems wie z.B. hochmolekulare lösliche Polysaccharide oder polare, vernetzende Komponenten wie z.B. Glycerin und methoxymethylolierte Harnstoffderivate tritt parallel zur erwähnten Selbstorganisation eine Membranbildung auf dem Gewebe ein. Bei diesem Vorgang teilt sich das zu Beginn homogene Dispersions-System in Abhängigkeit der Trocknungsbedingungen in zwei als Koazervat bezeichnete flüssige Phasen. Eine der beiden enthält vorwiegend die gelbildenden Polymeranteile, während die andere durch die unpolaren wasser- bzw. ölabstossenden Komponenten dominiert ist. Durch die während der Trocknung fortschreitende Vernetzungsreaktion und Desolvatation tritt eine Kontraktion des Polymergels auf, in deren Folge aus der vormals als Gel vorliegenden Struktur das Porensystem einer Membran entsteht.
Die fertige Ausrüstungsschicht stellt im wesentlichen eine Dispersion im Gelzustand dar. Das heterodisperse System kann zur Ausbildung kolumnarer Strukturen und damit zur Bildung einer mikrorauhen Oberfläche auf dem ausgerüsteten Textil genutzt werden, welche einen so genannten "Lotus"-Effekt aufweist. Dieses Phänomen ist aus der Natur bekannt (Ultrastructure and chemistry of the cell wall of the moss Rhacocarpus purpurascens: a puzzling architecture among plants [1,2]) und wird gemäss der vorliegenden Erfindung auf textile Hydrophobierungs- oder Oleophobierungs-Ausrüstungen übertragen. Der natürliche "Lotus"-Effekt basiert auf einer dreidimensionalen Oberflächenstruktur, wobei die durch Selbstorganisation auf Blättern entstandenen Wachskristalle eine Mikrorauhigkeit erzeugen, welche den Selbstreinigungseffekt der Pflanze sehr begünstigt [3].
Die Selbstorganisation und Membranstrukturbildung, respektive der Trend zur partiellen Phasentrennung der "guest"- und "host"-Komponenten führt zur Anreicherung der hydrophoben oder oleophoben "guest"-Komponenten an der Oberfläche, respektive der Phasentrennschicht zwischen Ausrüstungsschicht und der Umgebungsluft. Die Selbstorganisation der "guest"- und "host"-Komponenten führt somit zu erheblich gesteigerten Hydrophobierungs- oder Oleophobierungs-Effekten an der Ausrüstungsschichtoberfläche im Vergleich zu einem gleichmässig verteilten System.

Das neue Ausrüstverfahren ermöglicht es, im Gegensatz zu den bekannten Verfahren, bei Bedarf ganz oder teilweise auf umweltunverträgliche Chemikalien zu verzichten. Die jeweils einzusetzenden Chemikalien werden einerseits aufgrund des Anforderungsprofiles der Ausrüstung und andererseits anhand ihrer physikalischen, chemischen und physikalisch-chemischen Eignung im Sinne der a) Entstehung der gewünschten dreidimensionalen Oberflächenstruktur (der kolumnaren Struktur zur Erzielung des "Lotus"-Effektes) und/oder b) einer sich ausbildenden inhärenten Phaseninstabilität der Hydrophobierungs- oder Oleophobierungsflotte ausgewählt.

Hierzu werden gemäss Patentanspruch 1 mindestens zwei unterschiedliche Hydrophobierungschemikalien sowie vernetzbare, gelstrukturbildende Chemikalien (Dispersionsmittel und dispergierte Phase) auf die Faser- oder Gewebeoberfläche appliziert, welche aufgrund ihrer physikalischen, chemischen und physikalisch-chemischen Eigenschaften während eines anschliessenden Trocknungs- und Fixierprozesses die erwünschte Mikrorauhigkeit und/oder eine inhärente Phaseninstabilität der Hydrophobierungsflotte ergeben.

Die Selbstorganisation und Membranbildung wird sowohl über die Phaseninstabilität als auch durch Phasenübergänge einer oder mehrerer Ausrüstkomponenten bestimmt.
Wesentliche Eigenschaften des Hydrophobierungssystems sind somit unterschiedliche Aggregatzustände der Hydrophobierungskomponenten und/oder die thermodynamische Instabilität der Mischphase (Oel in Wasser Emulsion), in deren Folge eine der Hydrophobierungskomponenten sich im Rahmen eines Selbstorganisierungsprozesses verstärkt an der Grenzschicht (Flüssigkeits-/Gasphase, oder Fest-/Gasphase) ähnlich einem Tensid orientiert oder beispielsweise kolumnare Strukturen entstehen lässt. Die beim Auftragen solförmige Dispersion wird im weiteren Verfahren in einen Gelzustand überführt. Hierbei bildet eine der Hydrophobierungskomponenten, nämlich der "host" oder das Dispersionsmittel eine amorphe Matrix oder Membranstruktur, in welche die Zweitkomponente, nämlich der "guest" oder die dispergierte Phase eingelagert ist, entsprechend einem "guest-host"-System. Die Zweit- oder "guest"-Komponenten lassen sich anhand ihrer funktionalen Eigenschaften grob in zwei Gruppen einteilen. Einerseits kann von "Lotus"-Komponenten gesprochen werden, und andererseits von "Micellen"-Komponenten. Beide Gruppen von Komponenten besitzen während der Trocknung bis zu deren Fixierung eine gewisse Mobilität, welche für die Selbstorganisation und somit für den gewünschten Hydrophobierungs- oder Oleophobierungseffekt von entscheidender Bedeutung ist.

Die neue Ausrüstungsschicht ermöglicht es den Gelzustand von Dispersionsmittel und dispergierter Phase durch Energiezufuhr zumindest teilweise reversibel in einen Sol-Zustand zu überführen. Dies erlaubt es, vor allem nach längerer Beanspruchung der Ausrüstungsschicht, die nachlassende Hydro-oder Oleophobie, wieder ganz oder zumindest teilweise zu regenerieren. Dabei muss keinerlei Material von aussen zugeführt werden. Die Fähigkeit zur Selbstorganisation und die Mobilität der Kolloide in der solförmigen Dispersion führt zur Reorganisation und Konzentrierung an der Oberfläche der Ausrüstungsschicht, der Grenzschicht zum umgebenden Medium. Im einfachsten Fall kann die wasser- oder ölabstossende Wirkung eines textilen Artikels mit der neuen Ausrüstungsschicht schon durch einfaches Erhitzen im Wäschetrockner aufgefrischt werden.

Das beschriebene "guest-host"-System kann, gemäss dem Anforderungsprofil der Ausrüstung durch zusätzliche Komponenten erweitert werden. Beispiele sind die Mitverwendung polymerer Filmbildner, um einerseits die Haftung auf dem Textilmaterial und andererseits die Waschpermanenz der Ausrüstung zu verbessern.
Von wesentlicher Bedeutung für die Selbstorganisation bzw. Ausbildung von kolumriaren Strukturen ist die Herstellung der Hydrophobierungs- oder Oleophobierungsflotten. Hierzu wird die mengenmässige Hauptkomponente (Extender) des Hydrophobierungs-oder Oleophobierungssystems in eine wässrige Emulsion gebracht, in welche die Zweitkomponente, die in der Regel noch unpolarer als die Hauptkomponente ist, einemulgiert wird. Parallel dazu wird eine zweite Lösung, welche die gelbildenden Chemikalien, also den polymeren Binder und allfällige Katalysatoren enthält hergestellt. Mit den beiden Lösungen wird eine Oel-in-Wasser-Emulsion erzeugt indem die Hydrophobierungsmittel enthaltende Emulsion in die wässrige, die Gelierungschemikalienenthaltende Lösung einemulgiert wird. Das Emulgieren der Hydrophobierungs-oder Oleophobierungs-Komponenten erfolgt z.B. mit schnell drehenden Rühr- (Rotor/Stator-Prinzip) oder Hochdruck-Mischsystemen. Die so hergestellten Hydrophobierungs- oder Oleophobierungsflotten werden mit industrieüblichen Applikationstechniken wie Foulardieren, Beschichten, Sprühen oder Schäumen auf das Textilgut aufgetragen.

Zur besseren Haftung der Hydrophobierungs- oder Oleophobierungsschicht können speziell bei synthetischen Fasermaterialien Haftschichten aufgebracht werden, welche auch als Primer-Schichten bezeichnet werden. Das Ziel der Erstellung einer Primer-Schicht bei Synthesegeweben ist die Bereitstellung direkt oder indirekt polymerfixierter Reaktivgruppen zur kovalenten Fixierung der Hydrophobierungs- oder Oleophobierungs- bzw. Binderchemikalie der Hydrophobierungs-oder Oleophobierungsschicht. Primer-Schichten bei nativen Fasermaterialien dienen beispielsweise zur Steuerung der Quellung oder der oft parallel zur Hydrophobierung oder Oleophobierung geforderten Knitterfreiheit.

Die Erzeugung von Primerschichten und deren Anwendung sind vom chemischen Charakter des Trägermaterials abhängig. Es hat sich als vorteilhaft erwiesen bei Trägermaterialien aus synthetischen oder Regenerat-Fasern, Geweben oder Flächengebilden die Primerschicht entweder direkt aus einer modifizierten Trägermaterialoberfläche zu formen, oder vernetzte natürliche oder synthetische Hydroxyl-, Carbonyl-, Amino- oder Thiolgruppen-haltige Polymere auf das Trägermaterial aufzubringen. So bieten zum Beispiel Polyestermaterialien die Möglichkeit via Teilverseifung des Polyesters polymerfixierte Hydroxyl- und Carboxylgruppen zu erzeugen. Bei diesen Teilverseifungen werden obere Schichten des Polyestermaterials entfernt, die anteilig 0.01 bis 1% des Polyestermaterials, vorzugsweise 0.2 bis 0.4%, entsprechen.
Indirekt polymerfixierte Reaktivgruppen können beispielsweise durch das Aufbringen von natürlichen oder synthetischen hydroxylgruppenhaltigen Polymeren wie Lignin, Polysacchariden, Polyvinylalkohol etc. und anschliessendes Vernetzen mit beispielsweise Isocyanaten oder α-Aminoalkylierungsprodukten wie z.B. Dimethylolethylenharnstoff oder Hexamethylolmelamin-Derivaten erzeugt werden.
Die in Kombination mit den Hydrophobierungsmitteln eingesetzten polymeren Binder oder Gelbildner können vernetzbare, polykondensierte Formaldehydharze (Luwipal 66 der Firma BASF) oder deren Einzelkomponenten, präpolymere Acryl- oder Methacrylsäurederivate, Isocyanate, Polyurethane etc. in Verbindung mit mehrfach-reaktivgruppentragenden Verbindungen wie z.B. Polysacchariden, Glycerin oder Gelatine sein. Alle Binder- beziehungsweise Gelierungssysteme zeichnen sich durch eine begrenzte Wassermischbarkeit aus, welche sie inhärent oder nach entsprechender thermischen Behandlung als Eigenschaft besitzen.

Als Hydrophobierungshauptkomponenten, auch als Extender bezeichnet, können monomere oder präpolymere bzw. präpolykondensierte, jedoch immer fettmodifizierte unpolare Acrylate, Methacrylate, Isocyanate oder Epoxyd- und Harnstoffderivate, welche sich durch eine thermische Behandlung und entsprechende Katalysatoren waschbeständig auf dem Textilgut fixieren lassen, eingesetzt werden.

Die "guest"-Komponente oder dispergierte Phase, welche aufgrund ihrer Eigenschaften vorwiegend für die Selbstorganisation der Hydrophobierungs- oder Oleophobierungsschicht (Phasenseparation) und die Ausbildung kolumnarer Strukturen mit gerichteter Orientierung an der Phasengrenzfläche verantwortlich ist, kann je nach Anforderungsprofil der Ausrüstung aus sehr unterschiedlichen, jedoch immer sehr unpolaren, wasser- oder ölabstossenden Hilfsstoffen bestehen.
- Speziell zu erwähnen sind Silikonöle, fettmodifizierte Ester, Ether oder Amide (wie zum Beispiel Glycerinester und -ether, Sorbitanester und -ether) als hochsiedende, unpolare Flüssigkeiten, welche während des Fixierprozesses zur Phasengrenzfläche (Festkörper/Gas) diffundieren und in einer den Hydrophobierungs- oder Oleophobierungseffekt begünstigenden Position fixiert werden.
- Eine weitere Gruppe stellen Fettsäureester, Alkylether(C₁₂ - C₂₅) und beispielsweise polykondensierte Fettsäureamide dar, welche als Feststoffe in die Hydrophobierungs- oder Oleophobierungsemulsion eindispergiert werden und während der anschliessenden thermischen Fixierung ganz oder nur teilweise schmelzen und im Sinne des gewünschten Effektes die Phasengrenzfläche mit ihren physikalischen Eigenschaften dominieren.
- Eine dritte Gruppe umfasst Substanzen, welche kolumnare Strukturen ausbilden. Hierzu zählen z.B. mikronisierte Wachse (Partikelgrössen von 0.1 - 50 µm, vorzugsweise um die 20 µm) wie z.B. Polyolefin- und Fettsäureamidwachse sowie Wachse als fettmodifizierte Aminoalkylierungsprodukte und hydrophobe Siliziumdioxidpartikel (Partikelgrössen von 5 bis 100 nm), vorzugsweise Nanopartikel mit Partikelgrössen von 5 bis 50 nm, die ebenfalls in die Hydrophobierungs- oder Oleophobierungsflotte eindispergiert und anschliessend in der Ausrüstungsschicht fixiert werden. Beispiele solcher Substanzen sind Ceridust-Wachse (Clariant) oder Aerosile (Degussa), welche bevorzugt angewendet werden.

Die anschliessenden Beispiele geben einen Einblick in die Effizienz des Verfahrens.

**Beispiel 1:** Auf ein Polyestergewebe mit einem Quadratmetergewicht von 180 g wird durch Teilverseifung (0.3 %) eine Primer-Schicht zur Haftvermittlung zwischen Polyester und Hydrophobierungsschicht erzeugt. Das so vorbehandelte Gewebe wird mit einer Hydrophobierungsflotte mit einem Flottenauftrag von ca. 60 % imprägniert, anschliessend getrocknet und bei 150 °C während 3 Minuten kondensiert. Die Hydrophobierungsflotte enthält die folgenden Komponenten:

| | | |
|---|---|---|
| Wasser | 923.5 | ml/l |
| Zitronensäure | 5 | g/l |
| Aluminiumsulfat | 0.5 | g/l |
| Perapret HVN (Binder) | 26 | g/l |
| Guar (Gelbildner) | 2 | g/l |
| Phobotex FTC (Extender) | 40 | g/l |
| Glycerin-Monooleat | 5 | g/l |

Das hydrophobierte Gewebe zeichnet sich durch sehr gute Testnoten aus, wie sie üblicherweise nur bei Verwendung von Fluorcarbonharzen bzw. Silikonimprägnierungen zu erhalten sind (Tab. 1). Als Bewertungskriterien dienen der Spraytest nach ISO 4920-1981, die Abperlnote nach Bundesmann (ISO 9865/1993) sowie die gavimetrisch ermittelte, prozentuale Wasseraufnahme während des Beregnungstestes.

**Tab. 1: Testwerte der Hydrophobierung**

| | Original | nach 3 Wäschen (gem. EN 26330) |
|---|---|---|
| Spraytest | 100 % | 100 % |
| Wasseraufnahme | 9 % | 12 % |
| Abperlnoten | 1'/5, 5'/5, 10'/5 | 1'/5, 5'/4, 10'/4 |

**Beispiel 2:** Auf einem Polyestergewebe mit einem Quadratmetergewicht von 250 g wird durch Teilverseifung (0.5 %) eine Primer-Schicht erstellt. Das so vorbehandelte Gewebe wird auf einem Foulard mit einem Flottenauftrag von 55 % imprägniert und kontinuierlich auf einem Spannrahmen bei 80 °C getrocknet. Die Fixierung der Hydrophobierungsausrüstung erfolgt bei 160 °C während drei Minuten.
Die Hydrophobierungsflotte enthält neben den übrigen Komponenten hydrophobierte Siliziumdioxid-Nanopartikel (Aerosil R812S), welche für die kolumnaren Strukturen der Hydrophobierungs-Schicht verantwortlich sind.

| | | |
|---|---|---|
| Wasser | 757 | ml/l |
| Essigsäure | 5 | g/l |
| Aluminiumsulfat | 0.5 | g/l |
| Glycerin | 3 | g/l |
| Lyofix CHN | 9 | g/l |
| Cerol EWL | 220 | g/l |
| Tripalmitin | 4 | g/l |
| Aerosil R812S | 1.5 | g/l |

Das behandelte Gewebe zeichnet sich neben sehr guten Hydrophobierungsergebnissen (Tab. 2), durch einen sehr weichen "trockenen" Griff aus; dies im Unterschied zu Silikon-Hydrophobierungen, welche einen glatten Griff erzeugen. Ein weiterer Vorteil ist die verbesserte Schiebefestigkeit des Gewebes. Die Bewertungskriterien sind analog jenen des Beispiels 1.

**Tab. 2: Testwerte der Hydrophobierung**

| | Original | nach 3 Wäschen |
|---|---|---|
| Spraytest | 100 % | 100 % |
| Wasseraufnahme | 7 % | 9 % |
| Abperlnoten | 1'/5, 5'/5, 10'/5 | 1'/5, 5'/5, 10'/5 |

**Beispiel 3:** Ein abgekochtes und gebleichtes Baumwollgewebe mit einem Quadratmetergewicht von 150 g wird vor der Hydrophobierung mit einer Vernetzer enthaltenden Lösung imprägniert, um bei späterer Wasserkontamination das Eindringen des Wassers in die Fasern bzw. die Faserquellung zu minimieren. Zur Herstellung dieser Primer-Schicht enthält die Imprägnierflotte 10 g/l Rucon FAN (Rudolf Chemie), 3 g/l Zitronensäure, 5 g/l Magnesiumchlorid und 10 g/l Perapret HVN (BASF). Nach der Imprägnierung mit der Primer-Flotte wird das Gewebe bei 110°C während zwei Minuten getrocknet. Nun erfolgt die Applikation der Hydrophobierungsflotte, welche sämtliche Komponenten zur Erzeugung des durch Phasenseparation entstehenden Hydrophobierungseffektes enthält.

| | | |
|---|---|---|
| Wasser | 922.3 | ml/l |
| Guar | 2 | g/l |
| Citronensäure | 3 | g/l |
| Aluminiumsulfat | 1 | g/l |
| Phobotex FTC | 50 | g/l |
| Methacrylsäuredodecylester | 15 | g/l |
| Harnstoffperoxid | 1.5 | g/l |
| Eisensulfat | 0.2 | g/l |
| Tris-(trimethylsilyl)-phosphat | 5 | g/l |

Nach der auf einem Foulard durchgeführten Gewebeimprägnierung (Flottenauftrag 72 %) erfolgt die Trocknung bei 100 °C auf einem Spannrahmen. Die Fixierung der HydrophobierungsChemikalien wird ebenfalls auf einem Spannrahmen bei 160°C während zwei Minuten durchgeführt.

Die auf diese Weise erzeugte Hydrophobierung zeigt analoge Prüfwerte wie sie für die Beispiele 1 und 2 gefunden wurden.

**Tab. 3: Testwerte der Hydrophobierung**

| | Original | nach 3 Wäschen |
|---|---|---|
| Spraytest | 100 % | 100 % |
| Abperlnoten | 1'/5, 5'/5, 10'/5 | 1'/5, 5'/5, 10'/5 |

**Beispiel 4:** Ein vorbehandeltes und gefärbtes Baumwoll-/Polyestergewebe (70/30) mit einem Quadratmetergewicht von 120 g wird zur nachfolgenden Vernetzung des Baumwollanteiles mit einer Vernetzerlösung imprägniert und bei 130 °C getrocknet und vorkondensiert. Als Vernetzer dient ein formaldehydarmes Harnstoffderivat (Dimethoxy-ethylenharnstoff), unter Verwendung von Cirtonensäure und Magnesiumchlorid als Katalysatoren. In einem zweiten Arbeitsgang erfolgt die Oleophobierung des Gewebes indem eine Flotte mit den folgenden Komponenten auf das Gewebe appliziert und während einer Minute bei 120 °C getrocknet wird. Die Flottenaufnahme beträgt 65 % bezogen auf das Gewebetrockengewicht.

| | | |
|---|---|---|
| Wasser | 953 | ml/l |
| Essigsäure 60 % | 1 | ml/l |
| Ruco-Guard EPF 1561 | 40 | g/l |
| Ruco-Guard LAD | 4 | g/l |
| Aerosil R812S | 2 | g/l |

Die Fixierung wird auf dem Spannrahmen bei einer Temperatur von 160 °C, während einer Minute durchgeführt.
Das ausgerüstete Gewebe zeigt sehr gute wasser- und ölabweisende Eigenschaften wie dies die Testwerte der Tabelle 4 zeigen.

**Tab.4: Messwerttabelle der Oleophobierung**

| | | |
|---|---|---|
| | Original | nach 3 Wäschen |
| Spraytest | 100 % | 100 % |
| Abperlnoten | 1'/5, 5'/5, 10'/5 | 1'/5, 5'/5, 10'/5 |
| Oelabweisung* | 6 | 6 |

| | | |
|---|---|---|
| * gemäss AATCC Test Method 118-1997 (Oil repellency: Hydrocarbon Resistance Test) | | |

**Beispiel 5:** Ein Doppelgewebe mit folgender Komposition: 80% Polyami, 10% PES-Coolmax® und 10% Lycra mit einem Quadratmetergewicht von 170 g wird mit einer geschäumten Flotte beschichtet, um das Gewebe vorwiegend einseitig zu hydrophobieren. Die Beschichtungsflotte enthält sämtliche Chemikalien zur Erzielung des Hydrophobierungseffektes und zur Ausbildung kolumnarer Strukturen.

| | | |
|---|---|---|
| Wasser | 914.5 | g/l |
| Citronensäure | 5 | g/l |
| Aluminiumsulfat | 0.5 | g/l |
| Phobotex FTC | 60 | g/l |
| Glycerin | 3 | g/l |
| Lyofix CHN | 10 | g/l |
| Tripalmitin | 4 | g/l |
| Ceridust 9615A | 3 | g/l |

Die Hydrophobierungsflotte wird über ein schaumerzeugendes Aggregat in die Beschichtungsvorrichtung des Spannrahmens dosiert und so einseitig auf das Gewebe aufgebracht. Die Trocknung erfolgt bei einer Kühlgrenztemperatur von ca. 50 °C auf dem erwähnten Spannrahmen, auf dem anschliessend auch die Kondensation/Fixierung durchgeführt wird. Diese erfolgt bei 160 °C während zwei Minuten.
Die mit dieser Ausrüstung erzielten Effekte (Tab. 5) zeigen eine sehr gute wasserabstossende Wirkung bei gleichzeit gutem Feuchtigkeitstransport, welcher für Sportbekleidung sehr wichtig ist.

**Tab. 5: Prüfdaten der Ausrüstung**

| | Original | nach 3 Wäschen |
|---|---|---|
| Spraytest | 100 % | 100 % |
| Abperlnoten | 1'/5, 5'/5, 10'/5 | 1'/4, 5'/4, 10'/4 |
| Wasseraufnahme | 7 % | 13 % |

**Beispiel 6**: Ein Polyamidgewebe mit einem Quadratmetergewicht von 150 g wird mit einer Flotte imprägniert, deren Inhaltstoffe aufgrund der bei der Fixierung eintretenden Selbstorganisation der Komponenten, kolumnare Strukturen ausbilden. Wollpol A 702 (sauer vernetzendes Acrylpräpolymer, Firma Reichhold) und Acrylstearat sind Teile des Bindersystems zur besseren Fixierung des Phobotex FTC, welches in der Flotte mikrodispers emulgiert ist. Die Hydrophobierungsflotte wird mittels eines Foulards auf das Gewebe appliziert, wobei dieses anschliessend auf einem Spannrahmen getrocknet und kondensiert wird. Die Hydrophobierungsflotte besteht aus den folgenden Komponenten:

| | | |
|---|---|---|
| Wasser | 825.5 | ml/l |
| Isopropanol | 50 | ml/l |
| Meypro-Guar Casaa M-200 | 2 | g/l |
| Magnesiumchlorid x 6 H₂O | 4 | g/l |
| Wollpol A 702 50 % | 30 | g/l |
| Acrylstearat | 10 | g/l |
| Phobotex FTC | 75 | g/l |
| Azoisobutyronitril | 0.5 | g/l |

Die Trocknungstemperatur beträgt 60 °C und die Kondensationsbedingungen liegen bei 150 °C und 2.5 Minuten Behandlungsdauer.
Die so durchgeführte Hydrophobierungsausrüstung zeichnet sich durch sehr gute Effekte aus, welche in Tabelle 6 ausgewesen werden. Das auf diese Weise hydrophobierte Gewebe eignet sich hervorragend für die Verwendung von Sportswear-Artikel.

| | Original | nach 3 Wäschen |
|---|---|---|
| Spraytest | 100 % | 100 % |
| Abperlnoten | 1'/5, 5'/5, 10'/5 | 1'/5, 5'/5, 10'/5 |
| Wasseraufnahme | 3 % | 8 % |

Anhand von zwei weiteren Anwendungsbeispielen wird im folgenden ein "host"-System auf Acrylatbasis beschreiben. Der Ersatz der oben beschriebenen stearinmodifizierten Melaminformaldehydharze durch stearinmodifiziertes Polyacrylat hat sich unter anderem vorteilhaft für die Emulsionsstabilität erwiesen. Es wurden verschiedene modifizierte Acrylsäure- und Methacrylsäure-monomere (wie zum Beispiel: Acrylsäuredodecylester, Methacrylsäure- dodecylester, Acrylsäure- und Methacrylsäureester mit endständiger Tertiärbutylgruppierung, Acrylsäure- und Methacrylsäureester mit Trimehylsilangruppierung) untersucht, welche durch Emulsionspolymerisation ein statisch modifiziertes, schmelzfähiges, vernetzbares Präpolymer ergeben.

**Beispiel 7**: Ein Polyestergewebe mit einem Quadratmetergewicht von 230 g wird mit einer Hydrophobierungsflotte imprägniert, deren "host"-Komponente aus stearylmodifiziertem, vernetzbarem Acrylpräpolymer besteht. Die Herstellung des Acrylpräpolymers erfolgt nach einem Emulsionspolymerisationsverfahren. Das Acrylpräpolymers gelangt als 20 - 40 %ige Stammemulsion zur Anwendung. Zur besseren Stabilisierung des "guest-host"-Systems wird das Triglycerid ("guest"), welches im Zuge der Fixierung auf dem Gewebe zur Schichtoberfläche migriert, bereits während der Acrylatemulsionsherstellung zugemischt. Die, das Acrylpräpolymer und das Triglycerid enthaltende, Stammemulsion wird anschliessend in Verbindung mit den übrigen Chemikalien gemäss der folgenden Vorschrift in eine Wasservorlage eingerührt. Das stearylmodifizierte Acrylpräpolymer zeichnet sich durch eine sehr gute Filmbildung aus, welche während der Trocknung im Temperaturbereich von 60 - 90 °C stattfindet.

| | | |
|---|---|---|
| Wasser | 733 | g/l |
| Isopropanol | 80 | g/l |
| Sorbitanmonolaurat (Span 20) | 2.5 | g/l |
| Acrylatstammemulsion 32 % | 180 | g/l |
| Aerosil R 812 S | 4.5 | g/l |

Die Hydrophobierungsflotte wird durch Imprägnierung des Gewebes appliziert. Das Auftragsgewicht beträgt 48 % bezogen auf das Gewebetrockengewicht. Die Trocknungsbedingungen liegen bei 110 °C während 1.5 Minuten. Die anschliessende Kondensation wird bei 150 °C während 2 Minuten durchgeführt.
Die auf Acrylatbasis hergestellte Hydrophobierungsausrüstung ist bezüglich der Hydrophobierungskriterien direkt mit den Phobotex-Ausrüstungen vergleichbar, jedoch mit den Vorteilen einer wesentlich höheren Flottenstabilität und einer praktisch formaldehydfreien Ausrüstung.

| | Original | nach 3 Wäschen |
|---|---|---|
| Spraytest | 100 % | 100 % |
| Wasseraufnahme | 6 % | 8 % |
| Abperlnoten | 1'/5, 5'/5, 10'/5 | 1'/5, 5'/4, 10'/4 |

**Beispiel 8:** Ein Polyestergewebe, dessen Verwendungszweck im Sportswear-Artikelsektor liegt, wird mit einer Hydrophobierungsausrüstung versehen, welche dem bereits mehrfach erwähnten "guest-host"-Prinzip entspricht. Das "host"-System wird von einem Acrylpräpolymer gebildet, welches aus einem Monomergemisch, bestehend aus Methacrylsäure, Methacrylsäuredodecylester und Tertiär-butyl-amino-ethylmethacrylat (SERPOL QMO 204) nach dem Emulsionspolymerisationsverfahren hergestellt wird. Zur Herstellung der Acrylatstammemulsion wird dem Monomergemisch 10 % eines Stearyltriglycerides bezogen auf die Monomermasse beigemischt. Der Feststoffgehalt der Acrylatstammemulsion beträgt 35 %. Das,das Triglycerid enthaltende Acrylpräpolymer zeigt ein hervorragendes Schmelzverhalten bei 50 - 90 °C, verbunden mit der erwünschten Filmbildung und der eigendynamischen Orientierung des Triglycerides an der Schichtoberfläche. Zur Herstellung der Hydrophobierungsflotte wird die Acrylatstammemulsion zusammen mit den übrigen, teils vordispergierten Chemikalien (z.B. Aerosil R 812 S) in eine Wasservorlage eingerührt.

| | | |
|---|---|---|
| Wasser | 794 | g/l |
| Isopropanol | 50 | g/l |
| Acrylatstammemulsion 35 % | 150 | g/l |
| Aerosil R 812 S | 5 | g/l |
| Polyvinylpyrrolidon K 90 | 1 | g/l |

Die Applikation erfolgt durch Imprägnierung des Gewebes mit einem Flottenauftrag von 55 %. Die anschliessende Trocknung wird bei 110°C während 1.5 Minuten durchgeführt. Durch die nachfolgende Kondensation tritt eine Selbstvernetzung des Acrylpräpolymers ein, woraus eine sehr hohe Waschbeständigkeit resultiert.
Die nach dieser Vorschrift ausgrüsteten Gewebe zeigen sehr gute Hydrophobierungseigenschaften mit einer hohen Waschbeständigkeit, wie sie sonst nur mit fluorierten Hydrophobierungsmitteln erreicht werden.

| | Original | nach 3 Wäschen |
|---|---|---|
| Spraytest | 100 % | 100 % |
| Wasseraufnahme | 5 % | 7 % |
| Abperlnoten | 1'/5, 5'/5, 10'/5 | 1'/5, 5'/5, 10'/5 |

### Literatur:

- [1]: H.G.Edelmann, C. Neinhuis, M. Jarvis, B. Evans, E. Fischer, W. Barthlott
"Ultrastructure and chemistry of the cell wall of the moss Rhacocarpus purpurascens: a puzzling architecture among plants",
Planta (1998) 206, 315-321
- [2]: PCT/EP95/02934,
Prioritätsdaten: P 44 26 962.5 vom 29.07.1994
Anmelder: W. Barthlott,
Titel: "Self- cleaning surfaces of objects and process for producing same"
- [3]: W. Barthlott, C. Neinhuis,
"Nur was rauh ist, wird von selbst sauber"
Technische Rundschau Nr. 10 (1999), 56 - 57

## Patentansprüche

1. Hydrophobierungs- oder Oleophobierungs-Ausrüstungsschicht, appliziert auf einer Faser- oder Gewebeoberfläche, umfassend mindestens zwei Hydrophobierungs- oder Oleophobierungs-Komponenten, wobei eine erste Komponente mindestens ein Dispersionsmittel mit mindestens einer polaren Komponente und eine zweite Komponente mindestens eine apolare dispergierte Phase oder Kolloid umfasst und Dispersionsmittel und dispergierte Phase in einem Gelzustand vorliegen, und wobei Kolloide der dispergierten Phase anisotrop im Dispersionsmittel verteilt sind, so dass die Kolloide im Bereich einer Ausrüstungsschichtoberfläche, welche eine Phasengrenzschicht zwischen Ausrüstungsschicht und umgebender Atmosphäre bildet, konzentriert vorliegen.

2. Hydrophobierungs- oder Oleophobierungs-Ausrüstungsschicht gemäss Anspruch 1, **dadurch gekennzeichnet, dass** die Ausrüstungsschichtoberfläche eine gegenüber dem Dispersionsmittel gleichwertige oder gesteigerte Hydro-oder Oleophobie aufweist.

3. Ausrüstungsschicht gemäss Anspruch 1, **dadurch gekennzeichnet, dass** die dispergierte Phase hydro- oder oleophobe Kolloide umfasst, welche an der Ausrüstungsschichtoberfläche konzentriert in einer den Hydrophobierungseffekt begünstigenden räumlichen Anordnung vorliegen.

4. Ausrüstungsschicht gemäss Anspruch 3, **dadurch gekennzeichnet, dass** die dispergierte Phase mindestens eine unpolare, wasserabstossende Verbindung oder eine Kombination solcher Verbindungen aus einer der folgenden Gruppen umfasst:
- Silikonöle, fettmodifizierte Ester und Ether als hochsiedende, unpolare Flüssigkeiten,
- Fettsäureester, C12 bis C25 Alkylether und polykondensierte Fettsäureamide als Feststoffe.

5. Ausrüstungsschicht gemäss Anspruch 4, **dadurch gekennzeichnet, dass** die hochsiedenden, unpolaren Flüssigkeiten Glycerinester oder - ether oder Sorbitanester oder -ether umfasst.

6. Ausrüstungsschicht gemäss Anspruch 1, **dadurch gekennzeichnet, dass** die dispergierte Phase feste Partikel umfasst, welche an der Ausrüstungsschichtoberfläche kolumnare Strukturen mit gerichteter Orientierung ausbilden, so dass die Mikrorauhigkeit der Oberfläche einen "Lotus"-tffekt erzeugt.

7. Ausrüstungsschicht gemäss Anspruch 6, **dadurch gekennzeichnet, dass** die dispergierte Phase mindestens eine Verbindung oder eine Kombination von Verbindungen aus einer der folgenden Gruppen umfasst:
- mikronisierte Wachse mit Partikelgrössen zwischen 0.1 und 50 µm,
- Wachse als fettmodifizierte Aminoalkylierungs- oder Polyamidprodukte,
- hydrophobe Siliziumdioxid-Nanopartikel mit Partikelgrössen zwischen 5 - 50 nm.

8. Ausrüstungsschicht gemäss Anspruch 7, **dadurch gekennzeichnet, dass** die dispergierte Phase mikronisierte Wachse aus der Gruppe der Polyolefin- und Fettsäureamidwachse, und hydrophobiertes Siliziumdioxid umfasst.

9. Ausrüstungsschicht gemäss Anspruch 1, **dadurch gekennzeichnet, dass** das Dispersionsmittel mindestens ein Hydrophobierungsmittel oder eine Kombination von Hydrophobierungsmitteln umfasst.

10. Ausrüstungsschicht gemäss Anspruch 9, **dadurch gekennzeichnet, dass** die Hydrophobierungsmittel aus der Gruppe fettmodifizierter, unpolarer Acrylate, Methacrylate, Isocyanate, Epoxydderivate und Harnstoffderivate stammen.

11. Ausrüstungsschicht gemäss Anspruch 10, **dadurch gekennzeichnet, dass** die Hydrophobierungsmittel monomer, präpolymer oder präpolykondensiert sind.

12. Ausrüstungsschicht gemäss Anspruch 1, **dadurch gekennzeichnet, dass** das Dispersionsmittel einen polymeren Binder umfasst.

13. Ausrüstungsschicht gemäss Anspruch 12, **dadurch gekennzeichnet, dass** der Binder vernetzte präpolykondensierte Formaldehydharze oder deren Einzelkomponenten oder präpolymere Verbindungen oder deren Einzelkomponenten aus der Gruppe der Acrylsäurederivate, Methacrylsäurederivate, Isocyanate, Polyurethane umfasst.

14. Ausrüstungsschicht gemäss Anspruch 13, **dadurch gekennzeichnet, dass** die Präpolymere aus der Gruppe der modifizierten Acrylsäure- und Methacrylsäuremonomeren ausgewählt sind.

15. Ausrüstungsschicht gemäss Anspruch 14, **dadurch gekennzeichnet, dass** die Präpolymere Verbindungen aus der Gruppe der Acrylsäuredodecylester, Methacrylsäuredodecylester, Acrylsäure- und Methacrylsäureester mit endständiger Tertiärbutylgruppierung, Acrylsäure- und Methacrylsäureester mit Trimehylsilangruppierung umfassen, welche durch Emulsionspolymerisation in statisch modifizierte, schmelzfähige, vernetzbare Präpolymere überführbar sind.

16. Ausrüstungsschicht gemäss einem der Ansprüche 13 bis 15, **dadurch gekennzeichnet, dass** der Binder mehrfachreaktivgruppentragende Verbindungen umfasst.

17. Ausrüstungsschicht gemäss Anspruch 16, **dadurch gekennzeichnet, dass** die mehrfach-reaktivgruppentragenden Verbindungen einzeln oder in Kombination aus der Gruppe von Polysacchariden, Glycerin und Gelatine ausgewählt sind.

18. Ausrüstungsschicht gemäss Anspruch 1, **dadurch gekennzeichnet, dass** der Gelzustand von Dispersionsmittel und dispergierter Phase durch Energiezufuhr zumindest teilweise reversibel in einen Sol-Zustand überführbar ist.

19. Textiler Artikel umfassend ein Trägermaterial ausgewählt aus einer Gruppe, welche textile Fasern und Flächengebilde umfasst, und eine auf dem Trägermaterial angebrachte Hydrophobierungs- oder Oleophobierungs-Ausrüstungsschicht gemäss einem der vorhergehenden Ansprüche.

20. Textiler Artikel gemäss Anspruch 19, **dadurch gekennzeichnet, dass** zwischen Trägermaterial und Hydrophobierungs- oder Oleophobierungs-Ausrüstungsschicht eine Primerschicht zur verbesserten Haftung und Anbindung der Hydrophobierungs- oder Oleophobierungsschicht angeordnet ist.

21. Textiler Artikel gemäss Anspruch 20, **dadurch gekennzeichnet, dass** das Textilgut native Materialien umfasst und die Primerschicht bezüglich Textilgutes quellungsreduzierende und vernetzende Komponenten enthält.

22. Textiler Artikel gemäss Anspruch 20, **dadurch gekennzeichnet, dass** das Trägermaterial synthetische und Regenerat-Fasern, Gewebe oder Flächengebilde umfasst und die Primerschicht von einer modifizierten Trägermaterialoberfläche oder vernetzten natürlichen oder synthetischen Hydroxyl-, Carbonyl-, Amino- oder Thiolgruppenhaltigen Polymeren gebildet ist.

23. Verfahren zur Applikation einer Ausrüstungsschicht auf ein textiles Trägermaterial aus der Gruppe von Fasern, Geweben und Flächengebilden mit einer Hydrophobierungs- oder Oleophobierungsschicht
wobei in einem ersten Schritt eine mindestens ein Dispersionsmittel und eine dispergierte Phase umfassende Dispersion gemäss einem der Ansprüche 1 bis 13 auf das Trägermaterial appliziert wird, wobei die Dispersion während des Applizierens in einem Sol-Zustand vorliegt
und in einem nachfolgenden Schritt die Dispersion in einen Gelzustand überführt wird.

24. Ausrüstverfahren gemäss Anspruch 23, **dadurch gekennzeichnet, dass** die Ausrüstungsschicht bis zu einem Trocknungsgrad von annähernd 5% getrocknet wird.

25. Ausrüstverfahren gemäss Anspruch 23, **dadurch gekennzeichnet, dass** die Dispersion durch eine Oel-in-Wasser (O/W) Emulsion des hydrophoben Dispersionsmittels in Wasser und anschliessendes Einemulgieren der dispergierten Phase hergestellt wird.

26. Ausrüstverfahren gemäss Anspruch 24, **dadurch gekennzeichnet, dass** der Gel-Zustand durch Energiezufuhr zumindest teilweise reversibel in den Sol-Zustand überführbar ist.

27. Ausrüstverfahren nach Anspruch 23, **dadurch gekennzeichnet, dass** vor der Applikation der Hydrophobierungs- oder Oleophobierungsschicht die Oberfläche des Trägermaterials mit einer Primerschicht zur verbesserten Haftung der Hydrophobierungs- oder Oleophobierungsschicht versehen wird.

28. Ausrüstverfahren gemäss Anspruch 27, **dadurch gekennzeichnet, dass** durch die Primerschicht indirekt oder direkt am Trägermaterial fixierten Reaktivgruppen zur kovalenten Bindung der Hydrophobierungs- oder Oleophobierungsschicht bereitgestellt werden.

29. Ausrüstverfahren nach Anspruch 27, **dadurch gekennzeichnet, dass** das Trägermaterial Baumwollmaterial aus der Gruppe von Fasern und aus Fasern gebildetes Flächenmaterial ist, welches zur Erzeugung der Primerschicht mit einer Vernetzer enthaltenden Lösung imprägniert wird um Eindringen von Wasser in die Baumwollfasern zu verhindern und **dadurch** die Faserquellung zu minimieren.

30. Ausrüstverfahren nach Anspruch 29, **dadurch gekennzeichnet, dass** die Imprägnierung unter Verwendung von teilveretherten Hexamethylolmelamin- oder Dimethylolethylenharnstoffderivaten durchgeführt wird und das imprägnerierte Trägermaterial anschliessend getrocknet wird.

31. Ausrüstverfahren nach Anspruch 27, **dadurch gekennzeichnet, dass** das Trägermaterial ein Synthese- oder Regeneratmaterial aus der Gruppe von Fasern, Geweben und Flächengebilden ist und auf der Oberfläche des Trägermaterials mittels Oberflächenmodifikation polymerfixierte Hydroxyl- oder Carbonylgruppen erzeugt werden.

32. Ausrüstverfahren nach Anspruch 31, **dadurch gekennzeichnet, dass** das Trägermaterial ein Polyestermaterial ist und die Oberflächenmodifikation eine 0.01 bis 1 % Teilverseifung, vorzugsweise eine 0.2 bis 0.4 % Teilverseifung ist.

33. Ausrüstverfahren nach Anspruch 27, **dadurch gekennzeichnet, dass** das Trägermaterial ein Synthese- oder Regeneratmaterial aus der Gruppe von Fasern, Geweben und Flächengebilden ist und zum Erzeugen der Primerschicht reaktivgruppenhaltige Polymere auf das Trägermaterial aufgebracht und anschliessend vernetzt werden, wobei auf der Oberfläche des Trägermaterials indirekt polymerfixierte Hydroxyl-, Carbonyl-, Amino- und/oder Thiolgruppen erzeugt werden.

34. Ausrüstverfahren nach Anspruch 33, **dadurch gekennzeichnet, dass** die reaktivgruppengruppenhaltigen Polymere aus der Gruppe von Polysacchariden, Lignin, Polyvinylalkohol gewählt sind und die Vernetzung mittels Verbindungen aus der Gruppe von Isocyanaten und α-Amylierungsprodukten erfolgt.

35. Ausrüstverfahren nach Anspruch 27, **dadurch gekennzeichnet, dass** die Dispersion mindestens ein Dispersionsmittel, eine dispergierte Phase und mindestens ein Bindemittel umfasst.

36. Ausrüstverfahren nach Anspruch 35, **dadurch gekennzeichnet, dass** zur Herstellung der zu applizierenden Dispersion eine Dispersionsmittel und dispergierte Phase enthaltende Emulsion in eine wässrige bindemittelhaltige Lösung einemulgiert wird.

## Claims

1. A water repellent- or oil repellent finishing layer, applied to a fibre- or tissue surface, com-prising at least two water repellent- or oil repellent components, a first component comprising at least one dispersing agent with at least one polar component and a second component at least one apolar dispersed phase or colloid and the dispersing agent and dispersed phase are present in a gel state, and colloids of the dispersed phase being distributed in the dispersing agent in an anisotropic manner, so that the colloids are present in a concentrated form in the region of a finishing layer surface, which forms a phase boundary layer between the finishing layer and the surrounding atmosphere.

2. The water repellent- or oil repellent finishing layer according to claim 1, **characterised in that** the finishing layer surface has the same or in-creased water- or oil repellency relative to the dispersing agent.

3. The finishing layer according to claim 1, **characterised in that** the dispersed phase comprises water- or oil repellent colloids which are present in a concentrated form on the finishing layer surface in a spatial arrangement favouring the water repellent effect.

4. The finishing layer according to claim 3, **characterised in that** the dispersed phase comprises at least one apolar, water repellent compound or a combination of such compounds from one of the following groups:
- silicone oils, lipid modified esters and ethers as high boiling point, apolar liquids,
- fatty acid esters, C12 to C25 alkyl ethers and polycondensed fatty acid amides as sol-ids.

5. The finishing layer according to claim 4, **characterised in that** the high boiling point, apolar liquids comprise glycerol ester or -ether or sorbitan ester or -ether.

6. The finishing layer according to claim 1, **characterised in that** the dispersed phase comprises solid particles which form columnar structures having a directional orientation on the finishing layer surface, so that the microroughness of the surface generates a 'lotus' effect.

7. The finishing layer according to claim 6, **characterised in that** the dispersed phase comprises at least one compound or a combination of compounds from one of the following groups:
- micronised waxes with particle sizes between 0.1 and 50µm,
- waxes as lipid modified aminoalkylation- or polyamide products,
- water repellent silica nanoparticles with particle sizes between 5 - 50nm.

8. The finishing layer according to claim 7, **characterised in that** the dispersed phase comprises micronised waxes from the group consisting of poly-olefin- and fatty amide waxes and water repellent silica.

9. The finishing layer according to claim 1, **characterised in that** the dispersing agent comprises at least one water repellent agent or a combination of water repellent agents.

10. The finishing layer according to claim 9, **characterised in that** the water repellent agent originates from the group consisting of lipid modified apolar acrylates, methacrylates, isocyanates, epoxide derivatives and urea derivatives.

11. The finishing layer according to claim 10, **characterised in that** the water repellent agents are monomeric, prepolymeric or prepolycondensed.

12. The finishing layer according to claim 1, **characterised in that** the dispersing agent comprises a polymer binder.

13. The finishing layer according to claim 12, **characterised in that** the binder comprises cross-linked prepolycondensed formaldehyde resins or the individual components thereof or prepolymeric com-pounds or the individual components thereof from the group consisting of acrylic acid derivatives, methacrylic acid derivatives, isocyanates, poly-urethanes.

14. The finishing layer according to claim 13, **characterised in that** the prepolymers are selected from the group consisting of modified acrylic acid- and methacrylic acid monomers.

15. The finishing layer according to claim 14, **characterised in that** the prepolymers comprise compounds from the group consisting of acrylic acid dodecyl ester, methacrylic acid dodecyl ester, acrylic acid- and methacrylic acid esters with terminal tertiary butyl group, acrylic acid- and methacrylic acid esters with trimethylsilane group which can be transferred by emulsion polymerisation into statically modified, meltable, cross-linkable prepolymers.

16. The finishing layer according to any one of claims 13 to 15, **characterised in that** the binder has multiple reactive group containing compounds.

17. The finishing layer according to claim 16, **characterised in that** the multiple reactive group containing compounds are selected individually or in combination from the group consisting of polysaccharides, glycerol and gelatine.

18. The finishing layer according to claim 1, **characterised in that** the gel state of the dispersing agent and dispersed phase may be transferred in at least partially reversible manner into a sol state by energy supply.

19. A textile article comprising a carrier material selected from a group which comprises textile fibres and fabrics and a water repellent- or oil repellent finishing layer applied to the carrier material according to any one of the preceding claims.

20. The textile article according to claim 19, **characterised in that** a primer layer is arranged between the carrier material and the water repellent- or oil repellent finishing layer, for improved adhesion and bonding of the water repellent- or oil repellent layer.

21. The textile article according to claim 20, **characterised in that** the textile material comprises native materials and the primer layer contains components which are deswelling and cross-linking relative to the textile material.

22. The textile article according to claim 20, **characterised in that** the carrier material comprises synthetic and regenerated fibres, tissues or fabrics and the primer layer is formed by a modified carrier material surface or cross-linked natural or synthetic hydroxyl-, carbonyl-, amino- or thiol group containing polymers.

23. A method for the application of a finishing layer onto a textile carrier material from the group consisting of fibres, tissues and fabrics with a water repellent- or oil repellent layer,
in a first step a dispersion comprising at least one dispersing agent and a dispersed phase according to any one of claims 1 to 13 being applied to the carrier material, the dispersion during the application being present in a sol state,
and in a subsequent step the dispersion being transferred into a gel state.

24. The finishing method according to claim 23, **characterised in that** the finishing layer is dried to a drying degree of almost 5%.

25. The finishing method according to claim 23, **characterised in that** the dispersion is produced by an oil in water (O/W) emulsion of the water repellent dispersing agent in water and subsequent emulsifying of the dispersed phase therein.

26. The finishing method according to claim 24, **characterised in that** the gel state may be transferred in at least partially reversible manner into the sol state by energy supply.

27. The finishing method according to claim 23,' **characterised in that** before the application of the water repellent- or oil repellent layer the surface of the carrier material is provided with a primer layer for improved adhesion of the water repellentor oil repellent layer.

28. The finishing method according to claim 27, **characterised in that** reactive groups bound indirectly or directly to the carrier material by the primer layer are provided for covalent binding of the water repellent- or oil repellent layer.

29. The finishing method according to claim 27, **characterised in that** the carrier material is a cotton material from the group consisting of fibres and fabric formed from fibres, which is impregnated with a solution containing cross-linkers for creating the primer layer to inhibit the penetration of water into the cotton fibres and thereby to minimise the fibre swelling.

30. The finishing method according to claim 29, **characterised in that** the impregnation is carried out by using partially etherified hexamethylol melamine or dimethylol ethylene urea derivatives and the impregnated carrier material is subsequently dried.

31. The finishing method according to claim 27, **characterised in that** the carrier material is a synthetic or regenerated material from the group consisting of fibres, tissues and fabrics and the surface of the carrier material is modified to generate polymer bound hydroxyl or carbonyl groups.

32. The finishing method according to claim 31, **characterised in that** the carrier material is a poly-ester material and the surface is modified by a partial saponification of 0.01 to 1%, preferably a partial saponification of 0.2 to 0.4%.

33. The finishing method according to claim 27, **characterised in that** the carrier material is a synthetic or regenerated material from the group consisting of fibres, tissues and fabrics and reactive group containing polymers are applied to the carrier material and subsequently cross-linked to form the primer layer, hydroxyl-, carbonyl-, amino- and/or thiol groups bound indirectly to the polymer being generated on the surface of the carrier material.

34. The finishing method according to claim 33, **characterised in that** the reactive group containing polymers are selected from the group consisting of polysaccharides, lignin, polyvinylalcohol and the cross-linking is performed by means of compounds from the group consisting of isocyanates and α-amylation products.

35. The finishing method according to claim 27, **characterised in that** the dispersion comprises at least one dispersing agent, a dispersed phase and at least one binder.

36. Finishing method according to claim 35, **characterised in that** for producing the dispersion to be applied, an emulsion containing a dispersing agent and dispersed phase is emulsified into an aqueous binder containing solution.

## Revendications

1. Couche d'apprêt à caractère hydrophobe ou oléophobe, appliquée sur une surface fibreuse ou tissée, comprenant au moins deux composants à caractère hydrophobe ou oléophobe, dans laquelle un premier composant comprend au moins un agent dispersant avec au moins un composant polaire et un second composant comprend au moins une phase dispersée apolaire ou colloïde, l'agent dispersant et la phase dispersée étant présents dans un état en gel, et dans laquelle des colloïdes de la phase dispersée sont répartis de manière anisotrope dans l'agent dispersant, de telle façon que les colloïdes soient présents de manière concentrée dans la zone d'une surface de couche d'apprêt, qui constitue une couche de limite de phases entre la couche d'apprêt et l'atmosphère environnante.

2. Couche d'apprêt à caractère hydrophobe ou oléophobe selon la revendication 1, **caractérisée en ce que** la surface de la couche d'apprêt présente une hydrophobie ou une oléophobie de valeur égale ou accrue par rapport à l'agent dispersant.

3. Couche d'apprêt selon la revendication 1, **caractérisée en ce que** la phase dispersée comprend des colloïdes hydrophobes ou oléophobes, qui sont présents à la surface de la couche d'apprêt de manière concentrée et en une disposition spatiale favorisant l'effet hydrophobe.

4. Couche d'apprêt selon la revendication 3, **caractérisée en ce que** la phase dispersée comprend au moins un composé non polaire, à effet répulsif vis à vis de l'eau, ou une combinaison de tels composés issus de l'un des groupes suivants :
- huiles silicones, esters et éthers gras modifiés en tant que liquides non polaires, à température d'ébullition élevée,
- esters d'acides gras, alkyléthers en C12 à C25 et amides d'acides gras polycondensés en tant que matières solides.

5. Couche d'apprêt selon la revendication 4, **caractérisée en ce que** les liquides non polaires, à température d'ébullition élevée comprennent des esters ou des éthers du glycérol ou des esters ou des éthers du sorbitol.

6. Couche d'apprêt selon la revendication 1, **caractérisée en ce que** la phase dispersée comprend des particules solides qui constituent à la surface de la couche d'apprêt des structures colonnaires à orientation dirigée, de telle façon que la microrugosité de la surface crée un effet « lotus ».

7. Couche d'apprêt selon la revendication 6, **caractérisée en ce que** la phase dispersée comprend au moins un composé ou une combinaison de composés issus de l'un des groupes suivants :
- cires micronisées ayant des tailles de particules entre 0,1 et 50 µm,
- cires en tant que produits gras modifiés, d'aminoalkylation ou de polyamides,
- nanoparticules hydrophobes de silice ayant des tailles de particules entre 5 et 50 nm.

8. Couche d'apprêt selon la revendication 7, **caractérisée en ce que** la phase dispersée comprend des cires micronisées choisies dans le groupe des cires de polyoléfines et des cires d'amides d'acides gras, ainsi que de la silice rendue hydrophobe.

9. Couche d'apprêt selon la revendication 1, **caractérisée en ce que** l'agent dispersant comprend au moins un agent conférant un caractère hydrophobe ou une combinaison d'agents conférant un caractère hydrophobe.

10. Couche d'apprêt selon la revendication 9, **caractérisée en ce que** les agents conférant un caractère hydrophobe proviennent du groupe des acrylates, des méthacrylates, des isocyanates, des dérivés d'époxydes et des dérivés de l'urée, non polaires et résultant de la modification de corps gras.

11. Couche d'apprêt selon la revendication 10, **caractérisée en ce que** les agents conférant un caractère hydrophobe sont des monomères, des prépolymères ou des prépolycondensats.

12. Couche d'apprêt selon la revendication 1, **caractérisée en ce que** l'agent dispersant comprend un liant polymère.

13. Couche d'apprêt selon la revendication 12, **caractérisée en ce que** le liant comprend des résines formaldéhyde prépolycondensées, réticulées ou leurs composants individuels ou encore des composés prépolymères ou leurs composants individuels choisis dans le groupe des dérivés d'acide acrylique, d'acide méthacrylique, des isocyanates, des polyuréthanes.

14. Couche d'apprêt selon la revendication 13, **caractérisée en ce que** les prépolymères sont choisis dans le groupe des monomères modifiés d'acide acrylique et d'acide méthacrylique.

15. Couche d'apprêt selon la revendication 14, **caractérisée en ce que** les prépolymères comprennent des composés choisis dans le groupe des acrylates de dodécyle, des méthacrylates de dodécyle, des acrylates et méthacrylates ayant un groupement terminal tertiobutyle, des acrylates et méthacrylates ayant un groupement terminal triméthylsilane, qui sont susceptibles d'être convertis par polymérisation en émulsion en prépolymères réticulables, fusibles et statistiquement modifiés.

16. Couche d'apprêt selon l'une des revendications 13 à 15, **caractérisée en ce que** le liant comprend des composés portant des groupements multiréactifs.

17. Couche d'apprêt selon la revendication 16, **caractérisée en ce que** les composés portant des groupements multiréactifs sont choisis individuellement ou en combinaison dans le groupe composé des poly-saccharides, de la glycérine et de la gélatine.

18. Couche d'apprêt selon la revendication 1, **caractérisée en ce que** l'état en gel de l'agent dispersant et de la phase dispersée est susceptible d'être converti en un état en sol, par apport d'énergie et de manière au moins partiellement réversible.

19. Article textile, comprenant un matériau-support choisi dans un groupe qui comprend des fibres textiles et des semi-produits textiles bidimensionnels, ainsi qu'une couche d'apprêt à caractère hydrophobe ou oléophobe, déposée sur le matériau-support et selon l'une des revendications précédentes.

20. Article textile selon la revendication 19, **caractérisé en ce qu'**entre le matériau-support et la couche d'apprêt à caractère hydrophobe ou oléophobe est disposée une couche de primer en vue d'améliorer l'adhérence et la liaison de la couche à caractère hydrophobe ou oléophobe.

21. Article textile selon la revendication 20, **caractérisé en ce que** la matière textile comprend des matériaux naturels et **en ce que** la couche de primer relative à la matière textile contient des composants réduisant le gonflement et réticulables.

22. Article textile selon la revendication 20, **caractérisé en ce que** le matériau-support comprend des fibres, des tissus ou des semi-produits textiles bidimensionnels, synthétiques et de régénération et **en ce que** la couche de primer est formée par une surface modifiée de matériau-support ou par des polymères renfermant des groupements hydroxyle, carbonyle, amino ou thiol, naturels ou synthétiques, réticulés.

23. Procédé pour l'application d'une couche d'apprêt sur un matériau-support textile, choisi dans le groupe des fibres, des tissus et des semi-produits textiles bidimensionnels, avec une couche à caractère hydrophobe ou oléophobe
selon lequel dans une première étape est appliquée sur le matériau-support une dispersion selon l'une des revendications 1 à 13 et comprenant au moins un agent dispersant et une phase dispersée,
selon lequel la dispersion est présente lors de l'application dans un état en sol
et selon lequel dans une étape subséquente la dispersion est convertie dans un état en gel.

24. Procédé d'apprêt selon la revendication 23, **caractérisé en ce que** la couche d'apprêt est séchée jusqu'à un degré de séchage voisin de 5%.

25. Procédé d'apprêt selon la revendication 23, **caractérisé en ce que** la dispersion est préparée par une émulsion huile-dans-eau (H/E) de l'agent dispersant hydrophobe dans l'eau et par émulsification subséquente avec la phase dispersée.

26. Procédé selon la revendication 24, **caractérisé en ce que** l'état en gel est susceptible d'être converti en un état en sol, par apport d'énergie et de manière au moins partiellement réversible.

27. Procédé d'apprêt selon la revendication 23, **caractérisé en ce qu'**avant l'application de la couche d'apprêt à caractère hydrophobe ou oléophobe, la surface du matériau-support est pourvue d'une couche de primer en vue d'améliorer l'adhérence de la couche à caractère hydrophobe ou oléophobe.

28. Procédé d'apprêt selon la revendication 27, **caractérisé en ce que** par l'intermédiaire de la couche de primer sont mis à disposition des groupements réactifs fixés au matériau-support de manière indirecte ou directe, en vue de la liaison covalente de la couche à caractère hydrophobe ou oléophobe.

29. Procédé d'apprêt selon la revendication 27, **caractérisé en ce que** le matériau-support est du matériau cotonneux qui est issu du groupe des fibres et des matériaux textiles bidimensionnels formés de fibres et qui est, en vue de produire la couche de primer, imprégné d'une solution contenant des agents de réticulation, afin d'empêcher la pénétration d'eau dans les fibres de coton et de minimiser de ce fait le gonflement des fibres.

30. Procédé d'apprêt selon la revendication 29, **caractérisé en ce que** l'imprégnation est réalisée par utilisation de dérivés partiellement éthérifiés d'hexaméthylolmélamine-urée ou de diméthyloléthy-lène-urée et **en ce que** le matériau-support imprégné est ensuite séché.

31. Procédé d'apprêt selon la revendication 27, **caractérisé en ce que** le matériau-support est un matériau de synthèse ou de régénération, issu du groupe des fibres, des tissus et des semi-produits textiles bidimensionnels et **en ce que** sur la surface du matériau-support et au moyen d'une modification en surface sont créés des groupements hydroxyle, carbonyle, amino et/ou thiol, fixés sur des polymères.

32. Procédé d'apprêt selon la revendication 31, **caractérisé en ce que** le matériau-support est un matériau polyester et **en ce que** la modification en surface est une saponification partielle à raison de 0,01 à 1 %, de préférence une saponification partielle à raison de 0,2 à 0,4 %.

33. Procédé d'apprêt selon la revendication 27, **caractérisé en ce que** le matériau-support est un matériau de synthèse ou de régénération issu du groupe des fibres, des tissus ou des semi-produits textiles bidimensionnels et **en ce qu'**en vue de créer la couche de primer, des polymères renfermant des groupements réactifs sont appliqués et ensuite réticulés, en ce sens que sur la surface du matériau-support sont créés des groupements hydroxyle, carbonyle, amino et/ou thiol, fixés de manière indirecte sur les polymères.

34. Procédé d'apprêt selon la revendication 33, **caractérisé en ce que** les polymères renfermant des groupements réactifs sont choisis dans le groupe composé de polysaccharides, de lignine, d'alcools polyvinyliques et **en ce que** la réticulation s'effectue au moyen de composés issus du groupe des isocyanates et des produits d'α-amylation.

35. Procédé d'apprêt selon la revendication 27, **caractérisé en ce que** la dispersion comprend au moins un agent dispersant, une phase dispersée et au moins un liant.

36. Procédé d'apprêt selon la revendication 35, **caractérisé en ce qu'**en vue de la préparation de la dispersion à appliquer, on réalise l'émulsification d'une émulsion contenant agent dispersant et phase dispersée dans une solution aqueuse renfermant au moins un liant.
